## Europäisches Patentamt

## European Patent Office

## Office européen des brevets

(19)

(11) Veröffentlichungsnummer: **0 075 969**
**B1**

(12)

# EUROPÄISCHE PATENTSCHRIFT

(45) Veröffentlichungstag der Patentschrift:
23.10.85

(51) Int. Cl.⁴: **B 60 G  17/04**

(21) Anmeldenummer: **82200968.4**

(22) Anmeldetag: **28.07.82**

(54) **Niveauregulierventil für lastabhängige Luftfederungsanlagen in Fahrzeugen.**

(30) Priorität: **30.09.81  CH 6287/81**

(43) Veröffentlichungstag der Anmeldung:
**06.04.83 Patentblatt 83/14**

(45) Bekanntmachung des Hinweises auf die Patenterteilung:
**23.10.85 Patentblatt 85/43**

(84) Benannte Vertragsstaaten:
**AT BE CH DE FR GB IT LI NL SE**

(56) Entgegenhaltungen:
**DE - A - 1 906 062**
**DE - A - 1 949 761**
**DE - A - 2 440 800**
**DE - A - 2 532 616**
**DE - A - 3 013 305**
**DE - B - 1 133 636**
**FR - A - 1 298 221**
**GB - A - 895 433**
**US - A - 3 071 394**
**US - A - 4 245 854**

(73) Patentinhaber: **Werkzeugmaschinenfabrik Oerlikon-Bührle AG, Birchstrasse 155, CH-8050 Zürich (CH)**

(72) Erfinder: **Thöny, Riet, im Hürdli 4, CH-8152 Glattbrugg (CH)**
Erfinder: **Epp, Niklaus, Friedackerstrasse 11, CH-8153 Rümlang (CH)**
Erfinder: **Weidmann, Margrit, Brestenbühlstrasse 29, CH-8182 Hochfelden (CH)**

## Beschreibung

Die Erfindung betrifft ein Niveauregulierventil für lastabhängige Luftfederungsanlagen in Fahrzeugen mit einem als Doppelsitzventil ausgebildeten Ein- und Auslaßventil, wobei ein axial verschiebbarer, hohler Betätigungsstößel einen Auslaßventilsitz aufweist und von einem Betätigungshebel in Abhängigkeit der Niveaulage gesteuert wird.

Niveauregulierventile ermöglichen das Gleichhalten des Wagenkastenniveaus, unabhängig vom Beladungszustand eines Fahrzeuges, durch entsprechendes Be- oder Entlüften von Luftfederbälgen.

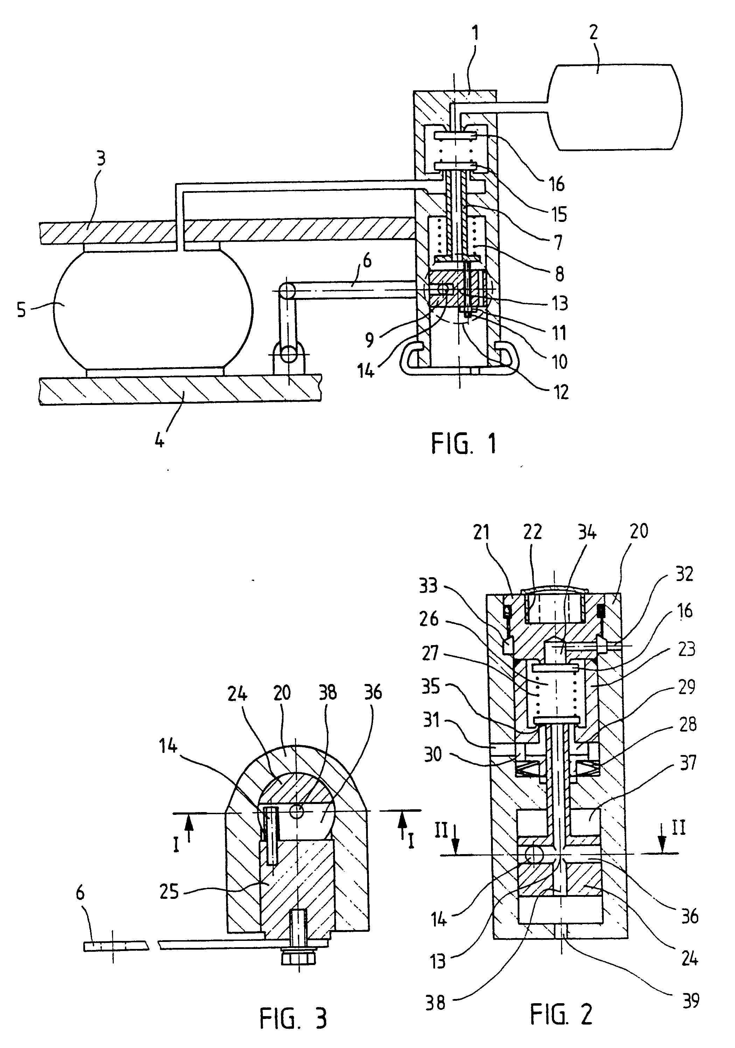

Es ist ein Niveauregulierventil gemäß dem Oberbegriff des Patentanspruches 1 bekannt, siehe Fig. 1, bei dem der hohle Betätigungsstößel und ein Steuerstück, das mit dem Betätigungshebel verbunden ist, getrennt ausgebildet sind. In diesem Steuerstück ist ein Gewindestift vorgesehen, mit dem der Betätigungsstößel gegen eine Feder einstellbar ist. Mit einer Mutter kann diese Stellung gesichert werden. Diese Einrichtung dient dazu, um Bearbeitungstoleranzen zwischen dem Einlaßventilsitz und dem Nullpunkt des Betätigungshebels auszugleichen.

Bei dieser bekannten Anordnung ist die Justierung der Abschlußstellung des Doppelventils in der Nullage des Betätigungshebels erschwert durch das Einstellen des Gewindestiftes und das Sichern durch die Mutter innerhalb des Gerätes.

Weitere Niveauregulierventile sind aus der DE-OS 1 949 761 und der GB-PS 895 433 bekannt. Beide zeigen einen in axialer Richtung ins Gehäuse einschraubbaren Einsatz an dem einerseits der Einlaßsitz und andererseits der Anschluß für die die Verbindungsleitung zum Vorratsluftbehälter angebracht sind. Die Justierung wird hier nun dadurch erschwert, daß sich die Verstellung des Einlaßsitzes und der Anschluß der Luftzufuhr gegenseitig behindern, insbesondere auch durch die verwendete Kontermutter.

Die Erfindung, wie sie in den Ansprüchen gekennzeichnet ist, löst die Aufgabe, eine einfache Justierung des Doppelsitzventils von außen zu schaffen, dies möglichst ohne Lösen des Verbindungsanschlusses zum Vorratsluftbehälter.

Anhand der Zeichnungen wird die Erfindung im folgenden ausführlich erläutert. Es zeigt

Fig. 1 ein Niveauregulierungsventil bekannter Art in einer Luftfederungsanlage,

Fig. 2 ein erfindungsgemäßes Niveauregulierventil in schematischer Darstellung und im Schnitt I-I,

Fig. 3 eine Aufsicht gemäß Schnitt II-II.

Anhand der Fig. 1 wird die Funktionsweise des bekannten Niveauregulierventils nachfolgend erläutert. Bei zunehmender Beladung bewegt sich der Wagenkasten 3 mit dem daran befestigten Niveauregulierventil 1 nach unten. Dadurch wird der mit dem Fahrgestell 4 verbundene Betätigungshebel 6 aus seiner horizontalen Lage wegbewegt. Der im Zentrum 13 eines ortsfest am Niveauregulierventil 1 drehbar gelagerten Mitnehmers 12, gestrichelt gezeichnet, angelenkte Betätigungshebel 6 verschiebt über den Mitnehmerstift 14 das Steuerstück 9 nach oben und öffnet damit über den Gewindestift 10 und den Stößel 7 das Einlaßventil 15. Druckluft aus dem Vorratsbehälter 2 fließt nun über das Rückschlagventil 16 und das Einlaßventil 15 in den Luftfederbalg 5, solange, bis durch Anheben des Wagenkastenniveaus der Betätigungshebel 6 seine horizontale Lage und das Einlaßventil 15 seine Abschlußstellung erreichen. Beim Entladen des Wagenkastens 3 bewegt sich der Betätigungshebel 6 und damit das Steuerstück 9 im Niveauregulierventil 1 nach unten, senkt den Stößel 7 und öffnet damit das Auslaßventil am oberen Ende des Stößels 7. Dadurch fließt Druckluft aus dem Luftfederbalg 5 über den hohlen Stößel 7 und die vorhandenen Öffnungen am Steuerstück 9 und am unteren Deckel in die Atmosphäre, solange, bis der Betätigungshebel 6 wieder seine horizontale Lage erreicht.

Das erfindungsgemäße Niveauregulierventil gemäß Fig. 2 und 3 enthält ein Gehäuse 20, einen Einschraubdeckel 21, der eine Innensechskant 22, einen Ventilsitz für ein Rückschlagventil 16 und Luftkanäle aufweist, einen im Gehäuse axial verschiebbaren Einlaßventilsitz 23, einen hohlen Betätigungsstößel 24 und einen im Gehäuse 20 drehbar gelagerten Mitnehmer 25, siehe Fig. 3. Der Einlaßventilsitz 23 ist hülsenförmig ausgebildet und enthält in seinem Innern eine Luftkammer 26, welche einerseits durch den Ventilteller des Rückschlagventils 16 und andererseits durch den Ventilteller des Einlaßventils 23 begrenzt ist. Diese beiden Ventilteller sind durch eine Feder 27 belastet. Der Einlaßventilsitz 23 wird mit einer Feder 28, vorzugsweise als Tellerfederpaket ausgebildet, gegen den Einschraubdeckel 21 gepreßt. Verbindungskanäle 29 im Einlaßventilsitz 23 führen zu einer Verbindungskammer 30, in der auch die Feder 28 angeordnet ist, und zu einem Anschluß 31 im Gehäuse 20 für eine Verbindungsleitung zu einem Luftfederbalg. Ein für eine Verbindungsleitung zum Vorratsluftbehälter vorgesehener, seitlich am Gehäuse 20 angeordneter Anschluß 32 führt zu einer ringförmigen Nut 33 im Gehäuse 20, in die ein Kanal 34, der zum Rückschlagventil 16 führt, mündet. Der hohle Betätigungsstößel 24 weist an seinem oberen Ende einen Auslaßventilsitz 35 und an seinem unteren kolbenförmigen Teil eine quer zur Gehäuseachse verlaufende Führungsnut 36 auf. Der kolbenförmige Teil des Betätigungsstößels 24 ist in einer atmosphärendruck aufweisenden Kammer 37 axial verschiebbar geführt. Die Auslaßverbindung wird über eine Zentralbohrung 38 im Betätigungsstößel 24 und eine Öffnung 39 im Gehäuse 20 hergestellt.

Wie insbesondere aus Fig. 3 ersichtlich, ist der im Gehäuse 20 ortsfest und drehbar gelagerte Mitnehmer 25 über einen Mitnehmerstift 14, der in der Führungsnut 36 geführt ist, mit dem Betätigungsstößel 24 verbunden. Ebenfalls am Mitnehmer 25 befestigt ist der Betätigungshebel 6. An sich genügt es, wenn der Betätigungshebel 6 im Mitnehmer 25 z. B. verschiebbar gelagert angeordnet ist.

Die Wirkungsweise des erfindungsgemäßen Niveauregulierventils in Verbindung mit einer Luftfederungsanlage ist wie in Fig. 1 beschrieben.

Die durch die Erfindung erreichten Vorteile sind im wesentlichen darin zu sehen, daß die Bearbeitungstoleranzen zwischen einem Zentrum 13 des Mitnehmers 25, das den gehäusefesten Drehpunkt des Betätigungshebels 6 bildet, und der Abschlußstellung des als Doppelsitzventil ausgebildeten Ein- 23 und Auslaßventilsitzes 35 mit Hilfe des im Gehäuse axial verschiebbaren Einlaßventilsitzes 23 auf einfache Art ausgeglichen und insbesondere die entsprechend genaue Einstellung mit einem Einschraubdeckel 21 gegen die Feder 28 von außen leicht zugänglich einstell- und feststellbar ist. Mit einem in den Innensechskant 22 eingesetzten Sechskantschlüssel kann nun problemlos der Nullpunkt des Betätigungshebels 6 in der Abschlußstellung des Doppelsitzventils von außen einjustiert werden. Besonders vorteilhaft ist die Verwendung eines Tellerfederpaketes als Feder 28, deren hohe Federkraft als Sicherungselement für die einjustierte Stellung wirkt. An sich kann der Einlaßventilsitz 23 und der Gewindeteil des Einschraubdeckels 21 einstückig ausgeführt sein, wobei zur Einstellsicherung beispielsweise die Feder 28 oder andere Sicherungsmittel dienen.

## Patentansprüche

1. Niveauregulierventil für lastabhängige Luftfederungsanlagen in Fahrzeugen, mit einem in einem Gehäuse (20) angeordneten Doppelsitzventil (15, 23, 35), das einen externen Luftfederbalg (5) über ein Einlaßventil (15, 23) mit einem externen Vorratsluftbehälter (2) und über ein Auslaßventil (15, 35) mit Atmosphäre verbindet, wobei der Einlaßventilsitz (23) hülsenförmig ausgebildet und im Gehäuse (20) axial einstellbar angeordnet ist und ein im Gehäuse (20) axial verschiebbarer, hohler Betätigungsstößel (7; 24) an einem Ende den Auslaßventilsitz (35) aufweist, über einen Mitnehmer (12; 25) mit einem Betätigungshebel (6) verbunden ist und das Doppelsitzventil (15, 23, 35) bei Nullage des Betätigungshebels (6) in Abschlußstellung hält, dadurch gekennzeichnet, daß der Einlaßventilsitz (35) durch einen stirnseitig am Gehäuse (20) angeordneten Einschraubdeckel (21) und gegen eine gehäuseseitig abgestützte Feder (28) einstellbar ist und daß ein radial zur Gehäuseachse, am Gehäuse (20) angeordneter Anschluß (32), ein im Einschraubdeckel (21) angebrachter Kanal (34) und eine den Anschluß (32) und den Kanal (34) verbindende, ringförmige Nut (33) für die Verbindung zum Vorratsluftbehälter (2) vorhanden sind.

2. Niveauregulierventil gemäß Anspruch 1, dadurch gekennzeichnet, daß mindestens eine Tellerfeder die Feder (28) bildet.

## Claims

1. Level-regulating valve for load-dependent pneumatic suspension units in vehicles, with a double-seat valve (15, 23, 35) arranged in a housing (20), which double-seat valve (15, 23, 35) connects an external pneumatic suspension bellows (5) to an external air-supply reservoir (2) via an inlet valve (15, 23) and to atomsphere via an outlet valve (15, 35), with the inlet valve seat (23) being designed in the shape of a sleeve and arranged axially adjustably in the housing (20), an a hollow actuating plunger (7; 24), which ist axially displaceable in the housing (20), having on one end the outlet valve seat (35), being connected via a follower (12, 25) to an actuating lever (6) and, with the actuating lever (6) in the neutral position, holding the double-seat valve (15, 23, 35) in the closed position, characterised in that the inlet valve seat (35) can be adjusted by a screw-in cover (21), which is arranged on the end face of the housing (20), and against a spring (28) supported on the housing, and that a connection (32) arranged on the housing (20) radially to the housing axis, a channel (34) made in the screw-in cover (21) and an annular groove (33) connecting the connection (32) and the channel (34) are available for connecting to the air-supply reservoir (2).

2. Level-regulating valve according to claim 1, characterised in that at least one plate spring forms the spring (28).

## Revendications

1. Vanne de réglage de niveau pour des dispositifs de suspension pneumatiques variables en fonction de la charge, comportant une vanne à double siège (15, 23, 35) logée dans un boîtier (20), qui relie un soufflet d'air extérieur (5) par une vanne d'entrée (15, 23) à un réservoir d'alimentation en air externe (2) et par une vanne de sortie (15, 35) à l'atmosphère, le siège (23) de la vanne d'entrée étant en forme de douille et est logé de façon réglable axialement dans le boîtier (20), ainsi qu'un poussoir de manoeuvre (7; 24), creux, coulissant axialement dans un boîtier (20), à une extrémité du siège de vanne de sortie (35), qui est relié au levier de manoeuvre (6) par l'intermédiaire d'un organe d'entraînement (12; 25) et maintient la vanne à double siège (15, 23, 35) en position de fermeture lorsque le levier de manoeuvre (6) est en position de zéro, caractérisée en ce que le siège de la vanne d'entrée (35) est réglable par un couvercle vissé (21) prévu du côté frontal sur le boîtier (20) et contre un ressort (28) s'appuyant du côté du boîtier, et en ce qu'il y a un raccord (32) radial par rapport à l'axe du boîtier (20), un canal (34) prévu dans le couvercle vissé (21) et une rainure annulaire (33) qui relie le raccord (32) et le canal (34) pour la liaison vers le réservoir d'alimentation en air (2).

2. Vanne de réglage de niveau selon la revendication 1, caractérisée en ce que le ressort (28) est constitué par au moins un ressort Belleville.

FIG. 1

FIG. 3

FIG. 2

5